(19) Europäisches Patentamt
European Patent Office
Office européen des brevets

(11) **EP 2 045 075 B1**

(12) **EUROPÄISCHE PATENTSCHRIFT**

(45) Veröffentlichungstag und Bekanntmachung des Hinweises auf die Patenterteilung:
**18.09.2019 Patentblatt 2019/38**

(51) Int Cl.:
*B32B 27/36* (2006.01)          *B32B 27/20* (2006.01)
*C08K 5/00* (2006.01)          *C08K 5/08* (2006.01)
*C08K 5/3447* (2006.01)

(21) Anmeldenummer: **08010670.1**

(22) Anmeldetag: **12.06.2008**

(54) **Bernsteinfarbene Polyesterfolie mit besonderer Eignung für Metallisierung und Stahllaminierung**

Amber coloured polyester film specially suited to electro-plating and steel lamination

Feuille de polyester ambre dotée d'une aptitude améliorée à la métallisation et au laminage d'acier

(84) Benannte Vertragsstaaten:
**BE DE ES FR GB IT LU NL TR**

(30) Priorität: **20.06.2007 DE 102007028348**

(43) Veröffentlichungstag der Anmeldung:
**08.04.2009 Patentblatt 2009/15**

(73) Patentinhaber: **Mitsubishi Polyester Film GmbH**
**65203 Wiesbaden (DE)**

(72) Erfinder:
• **Klein, Oliver, Dr.**
**55437 Ockenheim (DE)**
• **Konrad, Matthias, Dr.**
**65719 Hofheim (DE)**
• **Kliesch, Holger, Dr.**
**65462 Ginsheim-Gustavsburg (DE)**
• **Kuhmann, Bodo**
**65594 Runkel (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
EP-A- 1 251 369          EP-A- 1 714 998
CA-A1- 2 363 351          DE-A1- 10 002 155
US-A- 4 654 399          US-B1- 6 569 517

## Beschreibung

Die Erfindung betrifft eine mehrschichtige, orientierte Polyesterfolie, die Farbstoffe enthält, welche die Folie bernsteinfarben erscheinen lassen und nach Metallisierung oder Lamination der Folie mit einem Metallblech (Stahlblech) einen Goldeindruck hervorrufen. Die Erfindung betrifft ferner ein Verfahren zur Herstellung dieser Folie und ihre Verwendung für Verpackungen und Metalllaminate aller Art.

Die Verwendung von Polyesterfolien für Verpackungen und zur Stahllamination ist bekannt (US 2005/042468, US 2004/219316, EP-A-1 234 848).

Ebenso bekannt ist, dass gelbe und insbesondere bernsteinfarbene Folien in Verbindung mit Metallen wie Stahl und Aluminium einen Goldeindruck hervorrufen (CA 2363351).

Gelbe bzw. bernsteinfarbene Polyesterharze bzw. Polyesterfolien sind in EP-A-0 128 109 oder in JP 2006-142766 beschrieben. Die Harze aus EP-A-0 128 109 sind jedoch für einen guten Goldeindruck zu blaustichig. In JP 2006-142766 sind Folien beschrieben, in denen die Farbstoffe in einer Klebeschicht enthalten sind, was zu einer insbesondere für Lebensmittelanwendungen zu hohen Migration der Farbstoffe führt, die insbesondere auch bei den relativ hohen Temperaturen der Stahllamination auftritt und dort ebenfalls unerwünscht ist.

Aufgabe der vorliegenden Erfindung ist es, eine Folie bereitzustellen, welche einen sehr guten Goldeindruck nach Metallisierung oder Stahllaminierung vermittelt, keine nennenswerte Migration der Farbstoffe bei thermischer Belastung oder Chemikalienbehandlung aufweist und gut metallisierbar bzw. gut auf Stahl laminierbar ist. Außerdem soll die Folie bei den bei der Extrusion auftretenden hohen Temperaturen keinen nennenswerten Abbau der Farbstoffe aufweisen und so durch eine gute Regenerierbarkeit eine sehr wirtschaftliche Produktion ermöglichen.

Gelöst wird diese Aufgabe durch eine mindestens dreischichtige, biaxial gestreckte Polyesterfolie, die

a) eine Basisschicht B aufweist, welche einen gelben und einen roten Farbstoff enthält,

b) auf jeder Seite der Basisschicht B mindestens eine Schicht (A bzw. C) aufweist, die weniger als 0,1 Gew.-% des gelben und weniger als 0,1 Gew.-% des roten Farbstoffs aufweist, bevorzugt weniger als 0,02 Gew.-% des gelben und weniger als 0,02 Gew.-% des roten und besonders bevorzugt 0 Gew.-% des gelben und 0 Gew.-% des roten Farbstoffs aufweist, und die

c) ein Absorptionsmaximum im UV/Vis-Spektrum im sichtbaren Bereich zwischen 400 und 800 nm aufweist, welches zwischen 400 und 500 nm, bevorzugt zwischen 430 und 480 nm und besonders bevorzugt zwischen 450 und 460 nm liegt, wobei der gelbe Farbstoff ein Anthrachinon-Farbstoff und der rote Farbstoff ein Perinon-Farbstoff ist.

Die Gew.-%-Angaben beziehen sich hier auf das Gewicht der Schicht A bzw. C. Die erfindungsgemäßen Folien enthalten bevorzugt keine blauen Pigmente / Farbstoffe als farbgebende Substanzen.

Es hat sich dabei als günstig erwiesen, wenn die Transmission in % zwischen 430 und 480 nm größer ist als 3 %, bevorzugt größer als 7 % und besonders bevorzugt größer als 10 % ist, da eine zu geringe Transmission hier zu einer farbigen Folie führt, die die Reflektion des darunter liegenden Metalls nicht mehr ausreichend zulässt und so der Goldeindruck stumpf bzw. zu wenig strahlend wirkt.

Es hat sich weiterhin als günstig erwiesen, wenn die Folie im UV/Vis-Spektrum zwischen 400 und 470 nm nur ein Absorptionsmaximum aufweist, da die Einhaltung des richtigen Gelb/Rotverhältnisses so leichter zu kontrollieren ist.

Es hat sich ebenfalls als günstig erwiesen, wenn die Dicke der Schichten A und C bevorzugt mindestens 0,1 $\mu$m, insbesondere mindestens 0,5 $\mu$m und besonders bevorzugt mindestens 1 $\mu$m beträgt, da das Risiko einer Migration der Farbstoffe aus der Basisschicht nach außen um so größer wird je dünner die farbstofffreien bzw. annähernd farbstofffreien Deckschichten (A und C) sind.

Es hat sich weiterhin als günstig erwiesen, wenn die Transmission in % zwischen 600 und 700 nm über 70 %, bevorzugt über 80 % und besonders bevorzugt über 87 % liegt, da eine zu geringe Transmission hier einen zu bläulichen Goldglanz hervorrufen kann und eine höhere Transmission in den nicht für die Farbgebung benötigten Spektralbereichen des sichtbaren Lichtes zu einem strahlenderen Goldeindruck führt.

Die Dicke der Folie beträgt insgesamt bevorzugt 5 bis 150 $\mu$m, insbesondere 7 bis 25 $\mu$m und vorzugsweise von 8 bis 16 $\mu$m.

Die erfindungsgemäße Folie ist mindestens 3-schichtig (Schichtaufbau A-B-C) und weist mindestens eine farbstoffhaltige Basisschicht B auf, die Dicke der Basisschicht liegt bevorzugt zwischen 1 und 148 $\mu$m. Die Folie hat definitionsgemäß zwei flächige Außenseiten. Kommend von der Außenseite befindet sich zwischen dieser und einer farbstoffhaltigen Schicht jeweils mindestens eine Schicht (A bzw. C), welche farbstofffrei bzw. annähernd farbstofffrei ist und weniger als 0,1 Gew.-% des gelben und des roten Farbstoffs aufweist bzw. bevorzugt < 0,02 Gew.-% des gelben und des roten Farbstoffs aufweist und bevorzugt keinen gelben oder/und roten Farbstoff in der Rezeptur enthält, also Gehalt an gelbem oder/und rotem Farbstoff = 0 Gew.-%. Diese Schichten sind bevorzugt 0,05 bis 50 $\mu$m dick, insbesondere mindestens 0,1 $\mu$m, besonders bevorzugt mindestens 0,5 $\mu$m und idealerweise mindestens 1 $\mu$m dick. Zwischen den Schichten A und C können sich neben der Basisschicht B weitere farbstoffhaltige und/oder farbstofffreie Schichten befinden. Oberhalb (in Richtung Folienaußenseite) von A und C können sich weitere farbstofffreie bzw. annähernd farbstofffreie Schichten befinden.

In der bevorzugten Ausführungsform ist die Folie dreischichtig, d. h. A und C sind Außenschichten (Schichtaufbau A-B-C).

In einer weiteren bevorzugten Ausführungsform sind A und C die Außenschichten der erfindungsgemäßen Folie, wobei sich zwischen A und C außer der Basisschicht B eine oder mehrere farbstoffhaltige und/oder farbstofffreie Schichten befinden.

D. h. die äußeren Schichten der erfindungsgemäßen Folie sind frei von oder annähernd frei von (jeweils kleiner 0,1 Gew.-%, bevorzugt < 0,02 Gew.-%, und besonders bevorzugt sind keine gelben oder roten Farbstoffe in der Rezeptur enthalten) gelben und roten Farbstoffen.

In einer besonders bevorzugten Ausführungsform ist mindestens eine Außenschicht der Folie siegelfähig. Siegelfähig heißt, dass diese Schicht weitgehend amorph ist und so bei Temperaturen oberhalb von 120 °C unter Kontaktdruck (> 30 N/cm$^2$) ohne zusätzlichen Kleber mit einer anderen Polyesterfolie oder mit einem Stahlblech verbunden werden kann.

In Anwendungen, die UV-Licht ausgesetzt sind, hat es sich als günstig erwiesen, wenn mindestens die dem Licht zugewandte Außenschicht einen UV-Stabilisator in der Größenordnung von 0,1 bis 10 Gew.-% enthält. Günstigerweise liegt der Gehalt an UV-Stabilisator, bezogen auf das Gewicht der gesamten Folie, bei 0,1 bis 5 Gew.-%. Besonders geeignete UV-Stabilisatoren finden sich in der Gruppe der Triazine (insbesondere Triphenyl substituierte Triazine). Eine Auswahl an geeigneten UV-Stabilisatoren findet sich in DE-A-101 35 795.

Es hat sich weiterhin als günstig für die Farbstabilität erwiesen, wenn der farbstoffhaltigen Basisschicht B bevorzugt 0,01 bis 1 Gew.-% (bezogen auf das Gewicht von B) eines Radikalfängers (Antioxidantien) zugesetzt werden. Eine Auswahl an geeigneten Substanzen findet sich in DE-A-101 35 795, Seite 7.

Zu der gewünschten wirtschaftlichen Herstellbarkeit zählt, dass sich die erfindungsgemäße Folie bei ihrer Herstellung biaxial ohne Abrisse orientieren lässt und es auch bei einem Einsatz von ca. 40 - 80 % an Eigenregenerat nicht zu einer sichtbaren Farbveränderung kommt.

Zu den gewünschten guten mechanischen Eigenschaften zählen unter anderem ein hoher E-Modul in mindestens einer Folienrichtung (Längsrichtung (MD) und/oder Querrichtung (TD)), bevorzugt in beiden Folienrichtungen, von bevorzugt größer/gleich 500 N/mm$^2$, insbesondere größer/gleich 2000 N/mm$^2$ und besonders bevorzugt größer/gleich 4000 N/mm$^2$.

In einer bevorzugten Ausführungsform weist die Folie gemäß der Erfindung in keiner Folienrichtung (weder in MD- noch in TD-Richtung) einen Schrumpf von größer 25 % bei 200 °C auf. Vorzugsweise ist der Schrumpf bei 200 °C kleiner/gleich 10 %, insbesondere kleiner/gleich 4 %. Dies ist günstig, da die Folie sich so gut auch mit größeren Schichtdicken metallisieren lässt und bei der Metalllaminierung keine Falten auftreten.

Die erfindungsgemäße Folie enthält als Hauptpolymerbestandteil (d. h. bevorzugt zu 55 bis 100 Gew.-%, insbesondere zu 70 bis 100 Gew.-% und besonders bevorzugt zu 90 bis 100 Gew.-%) Polyester.

Erfindungsgemäß versteht man unter einem Polyester

- Homopolyester,
- Copolyester,
- Blends verschiedener Polyester,

wobei diese sowohl als reine Rohstoffe als auch als Rezyklat enthaltende Polyesterrohstoffe eingesetzt werden können.

Polyester enthalten Wiederholungseinheiten, die sich von Dicarbonsäuren (100 Mol-%) und Diolen (ebenfalls 100 Mol-%) ableiten. Die erfindungsgemäßen Polyester basieren bevorzugt auf Terephthalsäure oder 2,6-Naphthalindicarbonsäure als Dicarbonsäure und auf Ethylenglykol oder 1,3-Propandiol oder 1,4-Butandiol als Diol (PET, PBT, PTT und PEN).

Insbesondere enthalten die erfindungsgemäßen Polyester bevorzugt 10 bis 100 Mol-% Terephthalat (insbesondere > 50 Mol-% und besonders bevorzugt > 90 Mol-% Terephthalat) oder 10 bis 100 Mol-% 2,6-Naphthalat als Dicarbonsäurekomponenten, wobei die Gesamtmenge an Dicarbonsäurekomponenten 100 Mol-% ausmacht. Als weitere Dicarbonsäurekomponenten kann der erfindungsgemäße Polyester bevorzugt 0 bis 50 Mol-% 2,6-Naphthalat (wenn als Hauptkomponente Terephthalat eingesetzt wurde), 0 bis 50 Mol-% Terephthalat (wenn als Hauptkomponente Naphthalat verwendet wurde), 0 bis 20 Mol-% Isophthalat (bevorzugt 0,5 bis 10 Mol-%) sowie 10 bis 60 Mol-% 4,4'-Diphenyldicarboxylat enthalten. Andere Dicarbonsäurekomponenten wie 1,5-Naphthalindicarboxylat sollten gegebenenfalls einen Anteil von 30 Mol-%, bevorzugt 10 Mol-%, insbesondere 2 Mol-%, nicht überschreiten. Ausführungsformen mit mindestens 0,5 Mol-% Isophthalsäure, bevorzugt mindestens 1 Mol-% Isophthalsäure und besonders bevorzugt mindestens 3 Mol-% Isophthalsäure sind besonders bevorzugt, da diese weniger spröde sind und sich bei der späteren Verarbeitung besser Formänderungen anpassen.

Als Diolkomponente enthält der erfindungsgemäße Polyester im Allgemeinen 10 bis 100 Mol-% Ethylenglykol (EG), wobei die Gesamtmenge an Diolkomponenten 100 Mol-% ausmacht. Werden Mischungen verschiedener Diole eingesetzt, ist es vorteilhaft, den Anteil an Diethylenglykol mit 10 Mol-% nicht zu überschreiten und vorzugsweise 0,5 bis 5 Mol-% einzusetzen. Andere Diolkomponenten wie Cyclohexandimethanol, 1,3-Propandiol, 1,4-Butandiol sollten zweckmäßigerweise einen Anteil von 50 Mol-% nicht überschreiten und liegen bevorzugt bei einem Anteil von weniger als 30 Mol-%, besonders bevorzugt bei weniger als 10 Mol-%.

Die angeführten Polyester bzw. Copolyester können auch als Mischungen eingesetzt werden.

Die Dicarbonsäure- und Diolkomponenten können sich dabei ungleichmäßig über die einzelnen Schichten verteilen. D. h. die Polymerzusammensetzung der einzelnen Schichten (z. B. A-B-C) kann gleich oder verschieden sein.

Insbesondere die in einer bevorzugten Ausführungsform vorhandene Siegelschicht weist eine geänderte Copolyesterzusammensetzung auf. Diese Siegelschicht wird durch Coextrusion auf die anderen Schichten aufgebracht und besteht bevorzugt im Wesentlichen aus Copolyestern, die überwiegend aus Isophthal- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren wie sie auch z. B. in der Basisschicht vorkommen können. Die bevorzugten Copolyester, die die gewünschten Haftvermittlungseigenschaften bereitstellen, sind solche, die aus Ethylenterephthalat- und Ethylenisophthalat-Einheiten aufgebaut sind. Der Anteil an Ethylenterephthalat beträgt bevorzugt 60 bis 95 Mol-% und der entsprechende Anteil an Ethylenisophthalat 40 bis 5 Mol-%. Bevorzugt sind weiterhin Copolyester, bei denen der Anteil an Ethylenterephthalat 65 bis 90 Mol-% und der entsprechende Anteil an Ethylenisophthalat 35 bis 10 Mol-% beträgt, und ganz bevorzugt sind Copolyester, bei denen der Anteil an Ethylenterephthalat 70 bis 85 Mol-% und der entsprechende Anteil an Ethylenisophthalat 30 bis 15 Mol-% beträgt.

Daneben kann der Polyester für die Siegelschicht aliphatische Dicarbonsäuren wie Bernsteinsäure, Pimelinsäure, Korksäure, Azelainsäure, Sebazinsäure, Glutarsäure und Adipinsäure enthalten. Insbesondere bevorzugt sind die Azelainsäure, die Sebazinsäure und die Adipinsäure.

Weiterhin kann der Polyester für die Siegelschicht andere aliphatische Diole enthalten wie z. B. 1,3-Propandiol, 1,3-Butandiol, 1,4-Butandiol, 1,5-Pentandiol, 2,2-Dimethyl-1,3-Propandiol, Diethylenglycol, Triethylenglycol und 1,4-Cyclohexandimethanol. Bevorzugte Diole sind Ethylenglykol, Butylenglykol und Neopentylglykol.

Die Dicke der Siegelschicht liegt bevorzugt bei 0,5 bis 25 $\mu$m, insbesondere bei 0,75 bis 10 $\mu$m und besonders bevorzugt bei 1 bis 5 $\mu$m.

Neben den genannten Hauptpolymerbestandteilen kann die Folie bis zu 45 Gew.-%, bevorzugt bis zu 30 Gew.-%, besonders bevorzugt bis zu 20 Gew.-%, bezogen auf das Gewicht der Folie, andere Polymere wie z. B. Polyetherimide (z.B. Ultem® 1000 von GE Plastics Europe, NL), Polycarbonat (z. B. Makrolon® von Bayer, DE), Polyolefine wie COCs (z. B. Topas® von Ticona, DE), Polyamide (Ultramid® von BASF, DE) u. a. enthalten. In der am meisten bevorzugten Ausführungsform sind keine anderen Polymere neben den erfindungsgemäßen Polyestern in der Folie enthalten.

Allgemein werden die Polyester nach literaturbekannten Verfahren aus den genannten Diolen und Dicarbonsäuren oder Dicarbonsäureestern hergestellt. Die Herstellung der Polyester kann sowohl nach dem Umesterungsverfahren mit den üblichen Katalysatoren wie Zn-, Ca-, Li- und Mn-Salzen oder nach dem Direktveresterungsverfahren erfolgen.

Die erfindungsgemäße Folie enthält in der Basisschicht B einen gelben und einen roten Farbstoff. Beide Farbstoffe sollten in der Polyestermatrix gelöst oder so fein verteilt sein, dass sie nicht zu einem nennenswerten Trübungsanstieg führen, da sonst die eingangs genannten bevorzugten Transparenzwerte zwischen 600 und 700 nm u. U. nicht erreicht werden können. D. h. organische Farbstoffe sind bevorzugt im Sinne der Erfindung. Es können grundsätzlich alle gelben/roten Farbstoffe eingesetzt werden, die bei den für Polyester üblichen Verarbeitungstemperaturen bis ca. 300 °C stabil sind und zu dem gewünschten Absorptionsmaximum zwischen 400 und 500 nm führen. Im Sinne der vorliegenden Erfindung umfasst der Begriff Farbstoffe auch Pigmente, welche die oben genannten Eigenschaftsanforderungen erfüllen, d. h. der Begriff Farbstoff umfasst sowohl im Anwendungsmedium lösliche als auch unlösliche Farbmittel.

Bei den gelben Farbstoffen haben sich Anthrachinon-Farbstoffe und bei den roten Farbstoffen Perinon-Farbstoffe als besonders günstig erwiesen.

Geeignete Gelbfarbstoffe sind unter anderem SOLVENT YELLOW 163, vertrieben als ORACET® Yellow GHS von Ciba SC, CH und bevorzugt Pigment Yellow 147 entspricht C.I.Pigment 147 (C.I. No. 60645, CAS.Nr. 4118-16-5), vertrieben als Filester® Yellow RNB von Ciba SC, CH. Bei den Rotfarbstoffen hat sich FILESTER® Red GA von Ciba SC, CH (solvent red 135, C.I.Pigment No. 564120, CAS.Nr. 20749-68-2) als besonders günstig erwiesen. Die beiden bevorzugten Farbstoffe FILESTER® Red GA und Filester® Yellow RNB erzeugen nicht nur einen besonders guten Goldton, sondern erweisen sich auch als besonders stabil bei mehrmaliger Regenerierung der Folie (Aufschmelzen in einem Extruder und Granulierung nach der Folienherstellung mit anschließendem Wiedereinsatz) und sind zudem besonders lichtecht auch bei Außenbewitterungen der erhaltenen metallisierten Bleche. Die Lichtechtheit kann durch Zugabe von 0,5 bis 5 Gew.-% PEN (Polyethylennaphthalat) zu den farbstofffreien Schichten A und C noch weiter verbessert werden (Gew.-% bezogen auf das Gewicht der Schichten A oder C).

Die notwendige Menge an Farbstoff für einen guten visuellen Goldeindruck nach Metallisierung/Metalllaminierung ist abhängig von der Foliendicke. Die Transmission im Wellenlängenbereich zwischen 420 und 480 nm liegt bevorzugt unter 80 % und besonders bevorzugt unter 70 % und idealerweise unter 65 %. Im genannten Bereich liegt die Transmission aber bevorzugt über 5 %, besonders bevorzugt über 25 % und idealerweise über 40 %. Bei 550 nm liegt die Transmission bevorzugt unter 87 %, besonders bevorzugt unter 85 % und idealerweise unter 80 %. Bei 550 nm liegt die Transmission bevorzugt über 40 %, besonders bevorzugt über 60 % und idealerweise über 70 %.

Es hat sich als günstig erwiesen, wenn die Gelbzahl (YID) zwischen 20 und 60 liegt, bevorzugt zwischen 30 und 50 und besonders bevorzugt zwischen 35 und 45.

Es hat sich weiterhin als günstig erwiesen, wenn die Helligkeit L* größer ist als 80, bevorzugt größer als 85 und bevorzugt größer als 90.

Es hat sich weiterhin als günstig erwiesen, wenn a* größer ist als 1 und kleiner als 4, und als besonders günstig hat sich ein a* zwischen 1,8 und 2,9 erwiesen.

Es hat sich weiterhin als günstig erwiesen, wenn b* größer ist als 10 und kleiner als 40, und als besonders günstig hat sich ein b* zwischen 15 und 25 erwiesen. Die vorangehenden Angaben beziehen sich auf die fertige, nicht metallisierte oder laminierte Folie.

In einer 15 $\mu$m dicken Folie wird z. B. ein guter Goldeindruck nach Metallisierung mit Aluminium oder Laminierung auf Stahlblech durch Zugabe von 0,10 bis 0,5 Gew.-% "Pigment Yellow 147" und 0,05 bis 0,3 Gew.-% "solvent red 135", bezogen auf das Gesamtgewicht der Folie, erreicht. Bei einer 30 $\mu$m Folie müssen die Grenzen entsprechend durch 2 dividiert werden, um einen gleichguten Eindruck zu erreichen (bei noch größeren Foliendicken verändern sich die Faktoren leicht, so wird z. B. bei 150 $\mu$m ein guter Eindruck erreicht, wenn die Werte einer 15 $\mu$m dicken Folie durch 9 dividiert werden). Bei diesem Farbstoffsystem müssen, wenn Gelbfarbstoffgehalte am oberen Ende des Bereiches gewählt werden, auch Rotfarbstoffgehalte am oberen Ende des Bereiches gewählt werden und umgekehrt. Ein zu hoher Rotanteil im Verhältnis zu Gelb erzeugt ein unerwünschtes, eher kupferfarbenes Aussehen der Folie im Kontakt mit Metall, und ein zu geringer Rotanteil oder gar ein Fehlen des Rotfarbstoffs führen zu einem ebenfalls unerwünschten und unnatürlich kalten Goldglanz.

Durch die Kombination von Rot- und Gelbfarbstoff kann der Goldeindruck durch kleinere Veränderungen im Verhältnis der Farbstoffe untereinander auf die jeweilige Anwendung angepasst werden, und die bei der Produktion entstehenden Regenerate sind dennoch über weite Bereiche miteinander kompatibel. Bei nur einem bernsteinfarbenen Farbstoff kann nur die Intensität durch die Einsatzmenge angepasst werden, nicht aber die Farbe an sich.

Der Gehalt an Farbstoff (Summe aus Gelb und Rot) liegt bevorzugt nicht höher als 10 Gew.-% (bezogen auf das Gesamtgewicht der Folie), bevorzugt nicht höher als 5 Gew.-% und besonders bevorzugt nicht höher als 1 Gew.-%. Je niedriger der Gesamtgehalt an Farbstoff ist, umso besser können die sonstigen Eigenschaften der Folie eingestellt werden und umso niedriger ist das Risiko einer Migration des Farbstoffs aus der Folie.

Der Gehalt an Farbstoff (Summe aus Gelb und Rot) sollte bevorzugt > 0,02 Gew.-% und besonders bevorzugt > 0,05 Gew.-% und besonders bevorzugt > 0,075 Gew.-% sein, da sich bei niedrigeren Dosierungen eher Schwankungen in der dosierten Menge einstellen und es so zu unerwünschten Schwankungen im Goldeindruck kommt (Gew.-% bezogen auf das Gesamtgewicht der Folie).

Neben den Farbstoffen kann die erfindungsgemäße Folie weitere Additive wie Füllstoffe und Antiblockmittel enthalten. Typische Füllstoffe und Antiblockmittel sind anorganische und/oder organische Partikel, beispielsweise Siliciumdioxid (natürlich, gefällt oder pyrogen), Calciumcarbonat, Magnesiumcarbonat, Bariumcarbonat, Calciumsulfat, Bariumsulfat, Lithiumphosphat, Calciumphosphat, Magnesiumphosphat, Titandioxid (Rutil oder Anatas), Kaolin (hydratisiert oder kalziniert), Aluminiumoxid, Aluminiumsilikat, Lithiumfluorid, Calcium-, Barium-, Zink- oder Mangansalze der eingesetzten Dicarbonsäuren oder vernetzte Polymerpartikel, z. B. Polystyrol oder Polymethylmethacrylatpartikel, vorzugsweise wird Siliciumdioxid eingesetzt.

Es können auch Mischungen von zwei oder mehreren der oben genannten Partikelsysteme oder Mischungen von Partikelsystemen mit gleicher chemischer Zusammensetzung, aber unterschiedlicher Partikelgröße gewählt werden. Die Partikel werden dem Polyester zweckmäßigerweise schon vor dem Aufschmelzen zugesetzt.

Sofern weitere Additive in der Folie enthalten sind, beträgt die Gesamtkonzentration dieser Partikel bevorzugt weniger als 15 Gew.-%, bezogen auf das Gesamtgewicht der Folie, insbesondere weniger als 5 Gew.-% und besonders bevorzugt weniger als 1 Gew.-%. Die Partikel haben eine mittlere Größe ($d_{50}$-Wert) von bevorzugt 0,01 bis 15 $\mu$m, insbesondere 0,03 bis 10 $\mu$m und besonders bevorzugt 0,05 bis 4 $\mu$m. In einer bevorzugten Ausführungsform liegt der Anteil von Partikeln mit einem $d_{50}$-Wert von größer/gleich 4 $\mu$m bei kleiner/gleich 2000 ppm und besonders bevorzugt bei kleiner/gleich 1000 ppm, da sich dann die erfindungsgemäßen Absorptionsbereiche leichter erreichen lassen.

Es hat sich als vorteilhaft erwiesen, wenn die eventuell vorhandene Siegelschicht weniger als 0,3 Gew.-%, bevorzugt weniger als 0,1 Gew.-% Partikel enthält (bezogen auf das Gewicht der Siegelschicht).

Die erfindungsgemäße Folie kann weitere Additive wie UV-Stabilisatoren, Flammschutzmittel, Hydrolysestabilisatoren und Antioxidantien enthalten, wobei insbesondere UV-Stabilisatoren der Tinuvin® [R]-Reihe der Fa. Ciba SC, CH bevorzugt sind.

Ebenso kann die Folie zur Einstellung weiterer Eigenschaften beschichtet werden. Typische Beschichtungen sind insbesondere haftvermittelnd, antistatisch, schlupfverbessernd oder dehäsiv wirkende Schichten. Es bietet sich an, diese zusätzlichen Schichten über In-line-coating mittels wässriger Dispersionen nach der Längs- und vor der Querstreckung auf die Folie aufzubringen.

Die Additive, also die Farbstoffe und die gegebenenfalls vorhandenen weiteren Füllstoffe/Antiblockmittel und sonstigen Additive (wie UV-Stabilisatoren), werden bevorzugt mittels eines handelsüblichen Zweischneckenextruders in das Polymer eingebracht. Dabei wird ein Polyester gemäß der Erfindung in Granulatform zusammen mit den Partikeln/Additiven in den Extruder eingebracht und extrudiert, anschließend in einem Wasserbad abgeschreckt und dann granuliert.

Die Additive können aber auch direkt bei der Polyesterherstellung zugegeben werden. Für Farbstoffe und UV-Stabilisatoren ist dieses Verfahren wegen des zusätzlichen thermischen Stresses weniger bevorzugt. Üblicherweise werden die Additive im Falle des DMT-Verfahrens (DMT = Dimethylterephthalat als Ausgangsmonomer) nach der Umesterung bzw. direkt vor der Polykondensation (z. B. über die Transportleitung zwischen Umesterungs- und Polykondensationskessel) als glykolische Dispersion zugegeben. Die Zugabe kann aber auch schon vor der Umesterung erfolgen. Im Falle des TPA-Verfahrens (TPA = Terephthalic Acid = Terephthalsäure als Ausgangsmonomer) erfolgt die Zugabe bevorzugt zu Beginn der Polykondensation. Eine spätere Zugabe ist jedoch auch möglich. Es hat sich bei diesem Verfahren als günstig erwiesen, wenn die glykolischen Dispersionen vor der Zugabe über einen PROGAF PGF 57® (Hayward/Indiana, USA)-Filter filtriert werden.

Allgemein erfolgt die Herstellung durch ein Extrusionsverfahren. Als besonders vorteilhaft hat es sich erwiesen, die Farbstoffe sowie die gegebenenfalls verwendeten weiteren Additive wie Partikel, UV-Stabilisatoren, Flammschutzmittel, Hydrolysestabilisatoren und Antioxidantien in den genannten Mengen in Form von Masterbatchen vor der Extrusion zuzugeben. Insbesondere bei den Farbstoffen ist eine Zugabe direkt in den Extruder bei der Folienherstellung weniger bevorzugt, da dadurch größere Schwankungen bei der Farbgleichmäßigkeit auftreten können.

Bevorzugt bei der Masterbatchtechnologie ist, dass die Korngröße und das Schüttgewicht der Masterbatche ähnlich der Korngröße und dem Schüttgewicht des verwendeten Polyesterrohstoffs sind, so dass eine homogene Verteilung erreicht wird, aus der homogene Eigenschaften resultieren.

Die erfindungsgemäßen Polyesterfolien können nach bekannten Verfahren aus einem Polyesterrohstoff und gegebenenfalls weiteren Rohstoffen als mehrschichtige Folie hergestellt werden.

Die Masterbatche sowie die übrigen Rohstoffe können bei Verwendung von Zwei- und Mehrschneckenextrudern ohne Vortrocknung direkt extrudiert werden. Bei Einschneckenextrudern empfiehlt sich eine Trocknung bei ca. 120 bis 150 °C für mindestens 1 Stunde. Es hat sich als besonders vorteilhaft erwiesen, wenn der Extruder, der die farbstoffhaltige Basisschicht B extrudiert, ein Zwei- oder Mehrschneckenextruder ist, da dadurch auf die Trocknung der Ausgangsmaterialien verzichtet werden kann und so unnötiger thermischer Stress auf die Farbstoffe verhindert wird.

Bei dem bevorzugten Coextrusionsverfahren zur Herstellung der Folie werden die den einzelnen Schichten der Folie entsprechenden Schmelzen durch eine Flachdüse coextrudiert und als weitgehend amorphe Vorfolie auf einer Kühlwalze abgeschreckt. Es hat sich bei dreischichtigen Aufbauten der Folie als vorteilhaft erwiesen, wenn eine Düse ohne Freirand benutzt wird, da sonst ein Teil der farbstoffhaltigen Basisschicht nicht von den Deckschichten bedeckt ist und es so im Bereich der Düse aufgrund der sehr hohen Temperaturen noch zu einer geringen Ausgasung der Farbstoffe kommen kann. Die Vorfolie wird anschließend erneut erhitzt und in mindestens einer Richtung bzw. in Längs- und Querrichtung bzw. in Quer- und Längsrichtung bzw. in Längs-, in Quer- und nochmals und Längsrichtung und /oder Querrichtung verstreckt (orientiert). Die Folientemperaturen im Streckprozess liegen im allgemeinen 10 bis 60 °C über der Glasübergangstemperatur $T_g$ des verwendeten Polyesters, das Streckverhältnis der Längsstreckung liegt bevorzugt bei 2 bis 6, insbesondere bei 3 bis 4,5, das der Querstreckung bevorzugt bei 2 bis 5, insbesondere bei 3 bis 4,5, und das der gegebenenfalls durchgeführten zweiten Längs- und Querstreckung bevorzugt bei 1,1 bis 5. Die erste Längsstreckung kann auch gleichzeitig mit der Querstreckung (Simultanstreckung) durchgeführt werden. Es folgt die Thermofixierung der Folie bei Ofentemperaturen von ca. 180 bis 260 °C, vorzugsweise von 220 bis 250 °C. Anschließend wird die Folie abgekühlt und gewickelt.

In einer bevorzugten Ausführungsform findet die Thermofixierung bei Temperaturen von 220 bis 250 °C statt, und die Folie wird bei dieser Temperatur um mindestens 1 %, bevorzugt mindestens 2 %, in Querrichtung relaxiert.

In einer weiteren bevorzugten Ausführungsform findet die Thermofixierung bei 220 bis 250 °C statt, und die Folie wird bei dieser Temperatur um mindestens 1 %, bevorzugt mindestens 2 %, in Querrichtung relaxiert und anschließend nochmals bei Temperaturen zwischen 180 und 150 °C in der Abkühlphase um wiederum mindestens 1 %, bevorzugt mindestens 2 %, in Querrichtung relaxiert.

In einer weiteren bevorzugten Ausführungsform wird die Folie mindestens um den Faktor 3 in MD- und TD-Richtung gestreckt, wobei die Streckung in einem Simultanrahmen stattfindet. Die Thermofixierung findet bei 220 bis 250 °C statt, und die Folie wird bei dieser Temperatur um mindestens 1 % in Längs- und Querrichtung relaxiert.

Die erfindungsgemäßen Folien weisen die geforderten guten mechanischen Eigenschaften auf. So ist der E-Modul in mindestens einer Folienrichtung größer/gleich 500 N/mm$^2$.

Die Folie weist in keiner Folienrichtung (weder in MD noch in TD) einen Schrumpf von größer 25 % bei 200 °C auf.

Durch die farbstofffreien Schichten um die farbstoffhaltige Basisschicht kommt es bei der Herstellung weder im Extrusionsbereich noch im Bereich der Fixierung zu farbigen Ausgasungen oder Ablagerungen farbiger Oligomere, welche bei entsprechenden farbigen Einschichtfolien oder Folien mit nur einer farbstofffreien Schicht beobachtet werden.

Die Folie zeigt weiterhin eine sehr geringe bzw. keine Migration der Farbstoffe aus der Folie, s. Abfärbetest.

Die Folie kann nach literaturbekannten Verfahren metallisiert werden (bevorzugt Metallisierung mit Aluminium im Vakuum, aber auch Besputterung mit Aluminium oder Silber). Die Laminierung auf Stahlbleche kann durch Aufsiegeln auf heißen Stahl oder mittels heißer Walzen nach ebenfalls literaturbekannten Verfahren erfolgen oder durch Auflaminieren mit einem geeigneten Laminierkleber.

Die Folie eignet sich im metallisierten Zustand für viele "Gold-Look"-Anwendungen wie Kaffeeverpackungen, Glanzkaschierung von Kartons etc.. Auf Metall/Stahl laminiert eignet sich die Folie u. a. für Dosen mit "Gold-Look". D. h. die erfindungsgemäßen Folien eignen sich bevorzugt zur Herstellung von Verpackungsmaterialien, insbesondere für Nahrungs- und Genussmittel.

Die Messung der genannten Parameter bzw. der Eigenschaften in den nachfolgenden Beispielen erfolgte gemäß den folgenden Normen bzw. Verfahren:

**Messmethoden**

Mechanische Eigenschaften

Der E-Modul, die Reißfestigkeit, Reißdehnung und der $F_5$-Wert werden in Längs- und Querrichtung nach ISO 527-1-2 mit Hilfe eines Zug-Dehnungsmessers (Typ 010 der Fa. Zwick/DE) gemessen.

Schrumpf

Der thermische Schrumpf wird an quadratischen Folienmustern mit einer Kantenlänge von 10 cm bestimmt. Die Proben werden genau ausgemessen (Kantenlänge $L_0$), 15 min bei 200 °C in einem Umlufttrockenschrank getempert und anschließend bei Raumtemperatur genau ausgemessen (Kantenlänge L). Der Schrumpf ergibt sich aus der Gleichung

$$\text{Schrumpf [\%]} = 100 \cdot (L_0 - L) / L_0$$

Messung des mittleren Durchmessers $d_{50}$

Die Bestimmung des mittleren Durchmessers $d_{50}$ wird mittels Laser auf einem Malvern Master Sizer (Malvern Instruments Ltd., UK) nach der Standardmethode durchgeführt. Andere Messgeräte sind z. B. Horiba LA 500 oder Sympathec Helos, welche das gleiche Messprinzip verwenden. Die Proben werden dazu in eine Küvette mit Wasser gegeben und diese dann in das Messgerät gestellt. Der Messvorgang ist automatisch und beinhaltet auch die mathematische Bestimmung des $d_{50}$-Wertes.

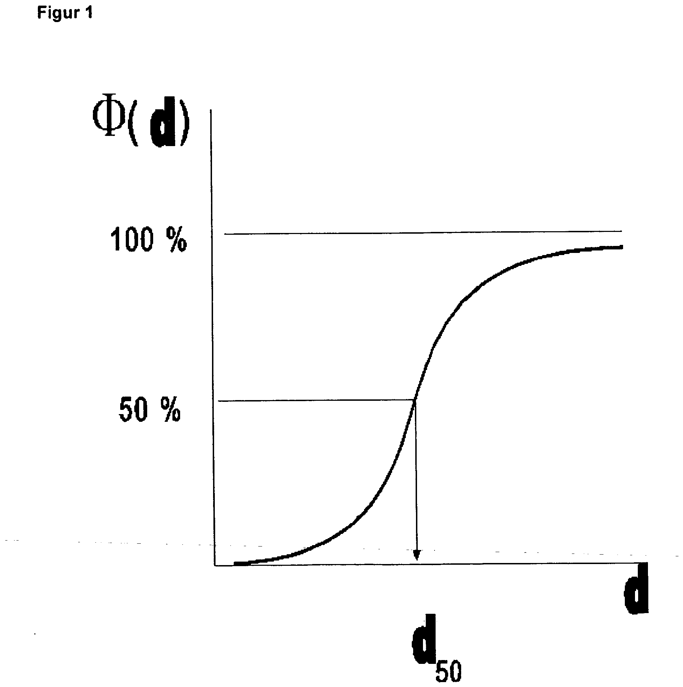

Der $d_{50}$-Wert wird dabei definitionsgemäß aus der (relativen) Summenkurve der Partikelgrößenverteilung bestimmt. Der Schnittpunkt des 50 %-Ordinatenwertes mit der Summenkurve liefert auf der Abszissenachse sofort den gewünschten $d_{50}$-Wert (vgl. dazu Figur 1).

UV/Vis-Spektren (Messung der Transmission)

Die Folien werden in Transmission in einem UV/Vis-Spektrometer (Lambda 3) der Firma Perkin Elmer, USA, gemessen. Als Hintergrund dient Luft.

Farbkennzahlen (CIE), Helligkeit, a*, b*

Diese Werte werden am Spektralphotometer der Firma BYK, DE, bestimmt. Gerät: color-sphere.

Die Bezeichnung des Messprogrammes lautet: auto-QC.

Gelbwert

Der Gelbwert G (YID) ist die Abweichung von der Farblosigkeit in Richtung "Gelb" und wird gemäß DIN 6167 gemessen.

Abfärbetest

Für den Test werden lebensmittelcharakteristische Flüssigkeiten herangezogen:

- 3 gew.-%ige Essigsäure
- 10 vol.-%iger Äthylalkohol
- Fett (Marke:PALMIN, ein Kokosfett)

Um eine bei der vorgeschriebenen Prüftemperatur mit den Dämpfen der Testflüssigkeit gesättigte Atmosphäre zu erhalten, wird der Boden eines Exsikkators mit der Testflüssigkeit beschickt und der Exsikkator 30 min lang bei 50 °C in den Trockenschrank gestellt.

Zwei Stück Filterpapier (weiß) werden mit der Testflüssigkeit getränkt. Die zu untersuchende Folie (10 cm$^2$) wird dann zwischen die beiden Lagen Filterpapier gelegt und mit einem Andruck von 0,7 kg/dm$^2$ zusammengepresst. Das so erstellte Paket wird zusammen mit einem gleich großen Stück (Blindprobe) des mit derselben Testflüssigkeit getränkten, jedoch nicht mit der eingefärbten Folie in Berührung gebrachten Prüfpapiers im vorkonditionierten Exsikkator für 5 Stunden lang bei

50 °C eingeschlossen.

Anschließend werden die kontaktierten Filterpapiere von der Folie entfernt und mit der Blindprobe verglichen. Der Test wird mit jeder Testflüssigkeit 3 mal wiederholt. Er gilt als bestanden, wenn keine Probe eine mit dem Auge erkennbare Abfärbung zeigt und sich keines der mit der farbigen Folie kontaktierten Filterpapiere bei einer Testflüssigkeit in der Gelbzahl, a* oder b* um mehr als 1,5 vom Mittelwert der Blindproben unterscheidet. Gelbzahl, a* und b* werden an einem BYK color-sphere-Messgerät der Firma BYK, DE, in Reflektion bestimmt.

Folienherstellung

Polyester-Chips werden gemäß den in den Beispielen angegebenen Verhältnissen gemischt und ohne Vortrocknung jeweils in Zweischneckenextrudern aufgeschmolzen. Die geschmolzenen Polymerstränge werden in einer Coextrusionsdüse zusammengeführt und über eine Abzugswalze (Temperatur der Walze 20 °C) abgezogen. Der erhaltene Film wird um den Faktor 3,9 in Maschinenrichtung bei 114 °C (Folientemperatur im Streckspalt) gestreckt, und in einem Rahmen wird bei 111 °C eine Querstreckung um den Faktor 3,8 durchgeführt. Anschließend wird die Folie bei 229 °C thermofixiert und in Querrichtung um 1 % bei Temperaturen von 229 bis 200 °C und ein weiteres Mal um 1 % bei Temperaturen zwischen 180 und 150 °C relaxiert. Die Produktionsgeschwindigkeit (Endfoliengeschwindigkeit) beträgt 300 m/min.

**Beispiele**

In den Beispielen kamen die folgenden Rohstoffe zum Einsatz (intrinsische Viskosität zwischen 0,57 und 0,75; alle Angaben in Gew.-%).

Masterbatch MB1

3 Gew.-% Filester Yellow RNB der Fa. Ciba SC und 97 Gew.-% Polyethylenterephthalat RT49 (PET) der Fa. Invista, DE. Hergestellt durch Mischung von Farbstoff und PET in einem konventionellen Zweischneckenextruder.

Masterbatch MB2

1,7 Gew.-% Filester Red GA der Fa. Ciba SC und 98,3 Gew.-% Polyethylenterephthalat RT49 (PET) der Fa. Invista, DE. Hergestellt durch Mischung von Farbstoff und PET in einem konventionellen Zweischneckenextruder.

Masterbatch MB3

1 Gew.% Sylysia 310 der Firma Fuji Silysia, JP, in PET. Das Pigment (SiO$_2$) wurde während der Umesterung zugegeben.

Rohstoff R1

100 Gew.-% Polyethylenterephthalat RT49

Rohstoff R2

Polyester (= Copolymeres aus 78 Mol-% Ethylenterephthalat, 22 Mol-% Ethylenisophthalat). Die Glasübergangstemperatur von Polyester I betrug ca. 75 °C.

Beispiel 1

Es wurde eine ABC-Folie mit einer Dicke der Basisschicht von 12 µm und Deckschichten A und C mit je 2 µm, wie oben angegeben, hergestellt.

Siegelfähige Deckschicht A: 100 % R2

Rohstoffmischung Basisschicht B: 10 % MB1 / 10 % MB2 / 80 % R1 Rohstoffmischung Deckschicht C: 10 % MB3 / 90 % R1

Beispiel 2

Es wurde eine ABC-Folie mit einer Dicke der Basisschicht von 47 µm und Deckschichten A (1 µm) und C (2 µm), wie oben angegeben, hergestellt. Die Produktionsgeschwindigkeit betrug 100 m pro min.

Deckschicht A: 2 % MB3 / 98 % R1
Rohstoffmischung Basisschicht B: 1,5 % MB1 / 1,7 % MB2 / 46,8 % R1, 50 % Eigenregenerat
Rohstoffmischung Deckschicht C: 5 % MB3 / 95 % R1

Vergleichsbeispiel 1

Es wurde eine ABC-Folie mit einer Dicke der Basisschicht von 6 µm und Deckschichten A und C mit je 5 µm, wie oben angegeben, hergestellt.

Siegelfähige Deckschicht A: 70 % R2 / 15 % MB1 / 15 % MB2
Rohstoffmischung Basisschicht B: 100 % R1
Rohstoffmischung Deckschicht C: 70 % R1 / 15 % MB1 / 15 % MB2

Vergleichsbeispiel 2

Es wurde eine ABC-Folie mit einer Dicke der Basisschicht von 12 µm und Deckschichten A und C mit je 2 µm, wie oben angegeben, hergestellt.

Siegelfähige Deckschicht A: 100 % R2
Rohstoffmischung Basisschicht B: 10 % MB1 / 90 % R1
Rohstoffmischung Deckschicht C: 10 % MB3 / 90 % R1

Die Eigenschaften der Folien aus Beispielen 1 und 2 und Vergleichsbeispielen 1 und 2 können der Tabelle entnommen werden.

Tabelle

| Beispiel | E-Modul MD in N/mm2 | E-Modul TD in N/mm2 | Schrumpf MD 200 °C % | Schrumpf TD 200 °C % | Abfärbetest bestanden Ja/ Nein | visueller Goldeindruck nach einseitiger Metallisierung mit Al |
|---|---|---|---|---|---|---|
| 1 | 4200 | 5050 | 4,3 | 2,3 | Ja | gut |
| 2 | 4140 | 4930 | 4,1 | 2,4 | Ja | gut |

(fortgesetzt)

| Vergleichsbeispiel | | | | | | |
|---|---|---|---|---|---|---|
| 1 | 4320 | 5110 | 4,2 | 2,2 | Nein | gut |
| 2 | 4230 | 5070 | 4,3 | 2,2 | Ja | schlecht, zu gelb |

Die Folien hatten eine Laufsicherheit, die mit der von farbstofffreier Folie gleicher Dicke und Schichtaufbau vergleichbar ist (Anzahl der Abrisse). Nur bei Vergleichsbeispiel 1 traten vermehrt Abrisse auf. Bei der Produktion von Vergleichsbeispiel 1 kam es zudem zu farbigen Ablagerungen auf den Streckwalzen und im Bereich der Abzugswalze sowie im Bereich der Fixierrahmens.

Alle Folien wiesen nur einen Peak zwischen 400 und 470 nm auf und eine Transmission zwischen 420 und 480 nm zwischen 70 % und 25 % auf. Alle Folien bis auf Vergleichsbeispiel 2 wiesen bei 550 nm eine Transmission unter 85 und > 40 % auf. Vergleichsbeispiel 2 lag bei 88,5 %.

**Patentansprüche**

1.   Biaxial orientierte Polyesterfolie, **dadurch gekennzeichnet, dass** sie

a) eine Basisschicht B aufweist, die einen gelben und einen roten Farbstoff enthält,
b) auf jeder Seite der Basisschicht B mindestens eine Schicht (A oder C) aufweist, die, bezogen auf das Gewicht dieser Schicht A oder C, weniger als 0,1 Gew.-% des gelben und weniger als 0,1 Gew.-% des roten Farbstoffs enthält, und
c) ein Absorptionsmaximum im UV/Vis-Spektrum zwischen 400 und 800 nm aufweist, das zwischen 400 und 500 nm liegt,

wobei der gelbe Farbstoff ein Anthrachinon-Farbstoff und der rote Farbstoff ein Perinon-Farbstoff ist.

2.   Polyesterfolie nach Anspruch 1, **dadurch gekennzeichnet, dass** die Schichten A und C keinen gelben und roten Farbstoff enthalten.

3.   Polyesterfolie nach einem oder mehreren der Ansprüche 1 bis 2, **dadurch gekennzeichnet, dass** der gelbe Farbstoff der CAS-Nr. 4118-16-5 und der rote Farbstoff der CAS-Nr. 20749-68-2 entspricht.

4.   Polyesterfolie nach einem oder mehreren der Ansprüche 1 bis 3, **dadurch gekennzeichnet, dass** der Anteil an rotem und gelbem Farbstoff in der Folie zwischen 0,02 und 10 Gew.-% liegt.

5.   Polyesterfolie nach einem oder mehreren der Ansprüche 1 bis 4, **dadurch gekennzeichnet, dass** der Polyester der Folie Ethylenterephthalat- und/oder Ethylen-2,6-naphthalat-Einheiten aufweist.

6.   Polyesterfolie nach einem oder mehreren der Ansprüche 1 bis 5, **dadurch gekennzeichnet, dass** eine Außenschicht der Folie siegelfähig ist.

7.   Polyesterfolie nach Anspruch 6, **dadurch gekennzeichnet, dass** die siegelfähige Außenschicht einen Copolyester mit Ethylenterephthalat- und Ethylenisophthalat-Einheiten aufweist.

8.   Polyesterfolie nach einem oder mehreren der Ansprüche 1 bis 7, **dadurch gekennzeichnet, dass** mindestens eine Außenschicht der Folie Antiblockmittel enthält.

9.   Polyesterfolie nach einem oder mehreren der Ansprüche 1 bis 8, **dadurch gekennzeichnet, dass** die Folie einen A-B-C Schichtaufbau aufweist.

10.   Polyesterfolie nach einem oder mehreren der Ansprüche 1 bis 9, **dadurch gekennzeichnet, dass** A und C die Außenschichten der Folie sind und sich zwischen diesen und der Basisschicht B eine oder mehrere farbstoffhaltige und/oder farbstofffreie Schichten befinden.

**11.** Verwendung einer Polyesterfolie nach einem oder mehreren der Ansprüche 1 bis 10 zur Herstellung von Verpackungsmaterial.

**12.** Verwendung nach Anspruch 11 zur Herstellung einer metallisierten Polyesterfolie oder eines Metalllaminats.

**13.** Metallisierte Polyesterfolie, hergestellt unter Verwendung einer Polyesterfolie nach einem oder mehreren der Ansprüche 1 bis 10.

**14.** Metalllaminat, hergestellt unter Verwendung einer Polyesterfolie nach einem oder mehreren der Ansprüche 1 bis 10.

**Claims**

**1.** Biaxially oriented polyester film, **characterized in that** it

a) has a base layer B, which comprises a yellow dye and a red dye,
b) has, on each side of the base layer B, at least one layer (A or C) which comprises, based on the weight of said layer A or C, less than 0.1% by weight of the yellow dye and less than 0.1% by weight of the red dye, and
c) one absorption maximum lying at from 400 to 500 nm in the UV/visible spectrum from 400 to 800 nm,

where the yellow dye is an anthraquinone dye and the red dye is a perinone dye.

**2.** Polyester film according to Claim 1, **characterized in that** the layers A and C comprise no yellow and red dye.

**3.** Polyester film according to one or more of Claims 1 and 2, **characterized in that** the yellow dye corresponds to CAS No. 4118-16-5 and the red dye corresponds to CAS No. 20749-68-2.

**4.** Polyester film according to one or more of Claims 1 to 3, **characterized in that** the proportion of red and of yellow dye in the film is from 0.02 to 10% by weight.

**5.** Polyester film according to one or more of Claims 1 to 4, **characterized in that** the polyester of the film has ethylene terephthalate units and/or ethylene 2,6-naphthalate units.

**6.** Polyester film according to one or more of Claims 1 to 5, **characterized in that** an external layer of the film is sealable.

**7.** Polyester film according to claim 6, **characterized in that** the sealable external layer has a copolyester having ethylene terephthalate units and ethylene isophthalate units.

**8.** Polyester film according to one or more of Claims 1 to 7, **characterized in that** at least one external layer of the film comprises antiblocking agents.

**9.** Polyester film according to one or more of Claims 1 to 8, **characterized in that** the film has an A-B-C layer structure.

**10.** Polyester film according to one or more of Claims 1 to 9, **characterized in that** A and C are the external layers of the film and there is/are one or more dye-containing and/or dye-free layers located between these and the base layer B.

**11.** Use of a polyester film according to one or more of Claims 1 to 10 for the production of packaging material.

**12.** Use according to Claim 11 for the production of a metallized polyester film or of a metal laminate.

**13.** Metallized polyester film, produced using a polyester film according to one or more of Claims 1 to 10.

**14.** Metal laminate, produced using a polyester film according to one or more of Claims 1 to 10.

**Revendications**

**1.** Feuille de polyester orientée biaxialement, **caractérisée en ce qu'**elle

a) présente une couche de base B, qui contient un colorant jaune et un colorant rouge,
b) présente de chaque côté de la couche de base B au moins une couche (A ou C), qui contient par rapport au poids de cette couche A ou C, moins de 0,1 % en poids du colorant jaune et moins de 0,1 % en poids du colorant rouge, et
c) présente un maximum d'absorption dans le spectre UV/Vis entre400 et 800 nm, qui se situe entre 400 et 500 nm,

dans laquelle le colorant jaune est un colorant anthraquinone et le colorant rouge est un colorant périnone.

**2.** Feuille de polyester selon la revendication 1, **caractérisée en ce que** les couches A et C ne contiennent pas de colorant jaune et rouge.

**3.** Feuille de polyester selon l'une ou plusieurs des revendications 1 à 2, **caractérisée en ce que** le colorant jaune correspond à CAS n° 4118-16-5 et le colorant rouge correspond à CAS n° 20749-68-2.

**4.** Feuille de polyester selon l'une ou plusieurs des revendications 1 à 3, **caractérisée en ce que** la part de colorant rouge et jaune dans la feuille se situe entre 0,02 et 10 % en poids.

**5.** Feuille de polyester selon l'une ou plusieurs des revendications 1 à 4, **caractérisée en ce que** le polyester de la feuille présente des unités d'éthylène téréphtalate et/ou d'éthylène-2,6-naphthalate.

**6.** Feuille de polyester selon l'une ou plusieurs des revendications 1 à 5, **caractérisée en ce qu'**une couche extérieure de la feuille est scellable.

**7.** Feuille de polyester selon la revendication 6, **caractérisée en ce que** la couche extérieure scellable présente un copolyester avec des unités d'éthylène téréphtalate et d'éthylène isophthalate.

**8.** Feuille de polyester selon l'une ou plusieurs des revendications 1 à 7, **caractérisée en ce qu'**au moins une couche extérieure de la feuille contient un agent anti-bloquant.

**9.** Feuille de polyester selon une ou plusieurs des revendications 1 à 8, **caractérisée en ce que** la feuille présente une structure en couches A-B-C.

**10.** Feuille de polyester selon l'une ou plusieurs des revendications 1 à 9, **caractérisée en ce que** A et C sont les couches extérieures de la feuille et une ou plusieurs couches contenant du colorant et/ou sans colorant se trouvent entre celles-ci et la couche de base B.

**11.** Utilisation d'une feuille de polyester selon l'une ou plusieurs des revendications 1 à 10 pour la fabrication de matériau d'emballage.

**12.** Utilisation selon la revendication 11 pour la fabrication d'une feuille de polyester métallisée ou d'un stratifié métallique.

**13.** Feuille de polyester métallisée, fabriquée en utilisant une feuille de polyester selon l'une ou plusieurs des revendications 1 à 10.

**14.** Stratifié métallique, fabriqué en utilisant une feuille de polyester selon l'une ou plusieurs des revendications 1 à 10.

**Figur 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005042468 A
- US 2004219316 A
- EP 1234848 A
- CA 2363351
- EP 0128109 A
- JP 2006142766 A
- DE 10135795 A

**In der Beschreibung aufgeführte Nicht-Patentliteratur**

- *CHEMICAL ABSTRACTS,* 4118-16-5
- *CHEMICAL ABSTRACTS,* 20749-68-2